# EUROPÄISCHE PATENTSCHRIFT

(11) **EP 0 739 458 B1**
(45) Veröffentlichungstag und Bekanntmachung des Hinweises auf die Patenterteilung: **25.03.1998**
(21) Anmeldenummer: 95935798.9
(22) Anmeldetag: 13.11.1995
(51) Int. Cl.: F16D 3/72

(54) **WELLENKUPPLUNG**
SHAFT COUPLING
ACCOUPLEMENT D'ARBRES

(30) Priorität: 14.11.1994 CH 3400/94
(43) Veröffentlichungstag der Anmeldung: 30.10.1996
(73) Patentinhaber: MAAG Getriebe AG, CH-8023 Zürich (CH); DR. ING. GEISLINGER & CO. SCHWINGUNGSTECHNIK GESELLSCHAFT M.B.H., A-5023 Salzburg (AT)
(72) Erfinder: DEEG, Thomas, CH-8472 Seuzach (CH); PFEIFER, Peter, A-5023 Salzburg (AT); LUTZ, Günther, A-5023 Salzburg (AT)
(74) Vertreter: Werner, Georges
(86) Internationale Anmeldenummer: CH9500266
(87) Internationale Veröffentlichungsnummer: WO9615385

(56) Entgegenhaltungen:
- EP-A- 0 534 925
- AT-A- 395 901
- FR-A- 2 080 428
- FR-A- 2 534 994
- FR-A- 2 564 538

## Beschreibung

Die vorliegende Erfindung betrifft eine Wellenkupplung zur Verbindung einer Antriebs- und einer Abtriebswelle, mit zwei auf die Wellen aufzuschrumpfenden Nabenteilen mit je einem Nabenflansch und einem diese miteinander verbindenden Zwischenrohr mit zwei jeweils eine elastisch verformbare Membran bildenden Seitenflanschen, welche mit den Nabenflanschen zwecks Drehmomentübertragung verbunden sind, wobei mindestens die Nabenteile mit den zugehörigen Nabenflanschen und das Zwischenrohr mit seinen Seitenflanschen aus Kunststoff bestehen, dabei die Nabenteile aus hochmoduligen FVW.

Kupplungen der vorgenannten Art sind insbesondere bei schnelllaufenden Maschinen bekannt. Sie dienen dabei der Uebertragung des Drehmomentes und allfälliger Zusatzkräfte von einer Stahlwelle mittels bekanntem Druckölverband auf eine Stahlnabe und von dieser Stahlnabe über aufgeschrumpfte Kunststoffnaben und sog. Membranen eines Zwischenrohres (Torsionsrohr). Bei diesen bekannten Konstruktionen werden Teile aus Stahl und solche aus Kunststoff verwendet. Eine typische Konstruktion der eingang definierten Art zeigt z.B. die EP-A-0534925.

Aufgabe der vorliegenden Erfindung ist die Schaffung einer Wellenkupplung, welche bei grundsätzlich gleichem technischem Aufbau und entsprechender Montage das schwingungstechnische Verhalten der miteinander gekuppelten Maschinen verbessert, ohne dass damit ein Mehraufwand verbunden wäre.

Diese Aufgabe wird bei einer Wellenkupplung der eingangs definierten Art erfindungsgemäss durch die Merkmale gemäss dem Kennzeichnenden Teil von Anspruch 1 gelöst.

Besonders bevorzugte Ausführungsformen der erfindungsgemässen Wellenkupplung sind in den abhängigen Ansprüchen definiert.

Es hat sich überraschenderweise gezeigt, dass eine erfindungsgemäss aufgebaute Kupplung gegenüber den bekannten Ausführungen aus Stahl und Kunststoff leichter und billiger ist und dank dem reduzierten Gewicht das schwingungstechnische Verhalten der die Kupplung enthaltenden Maschine wesentlich verbessert.

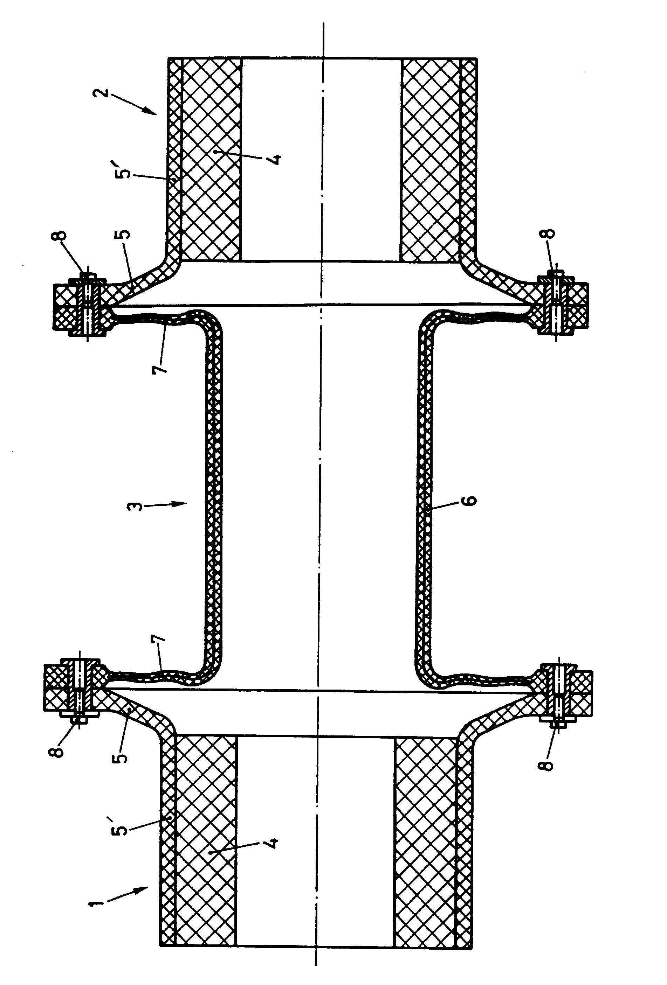

Die Erfindung wird nachstehend anhand eines in der Zeichnung dargestellten Ausführungsbeispiels noch etwas näher erläutert.

Die einzige Figur zeigt eine erfindungsgemässe Kupplung zur Verbindung von zwei Wellen (nicht dargestellt), nämlich einer Antriebs- und einer Abtriebswelle. Die Nabe 1 wird auf die antriebsseitige Welle aufgeschrumpft bzw. aufgepresst (mittels bei derartigen Kupplungen bekannten Methoden), während die Nabe 2 auf die abtriebsseitige Welle aufzuschrumpfen bzw. aufzupressen ist. Das bekannte Aufschrumpfen erfolgt z.B. mit einem Druckölverband, was dem Anwender erlaubt, die Kupplung mit den gleichen Werkzeugen zu montieren, welche für Stahlkupplungen (z.B. Zahnkupplungen, Stahlmembrankupplungen) verwendet werden.

Die Naben 1 und 2 weisen beim gezeigten Beispiel einen identischen Aufbau auf. Jede Nabe 1, 2 besteht aus einem eigentlichen Nabenteil 4 und zwei Nabenflanschen 5, wobei letztere über einen zylindrischen Rohransatz 5' mittels einer Schrumpfklebung auf die Nabenteile 4 aufgeklebt sind. Sowohl Nabenteile 4 als auch die Nabenflansche 5, 5' bestehen aus hochmoduligem FVW, insbesondere aus CFK, und weisen damit eine hohe Steifigkeit auf.

Zwischen den beiden Naben 1, 2 ist ein Torsionsrohr 3, das sog. Zwischenrohr, angeordnet, bestehend aus einem zylindrischen Rohrabschnitt 6 mit beidseitig angeordneten Seitenflanschen 7. Auch die beiden eine leicht elastisch verformbare Membran bildenden Seitenflansche 7 sind gleich ausgebildet. Die Seitenflansche 7 sind gewellt ausgebildet (z.B. gemäss AT-A 395 901 der Firma Geislinger) und bestehen ebenfalls aus Kunststoff. Wie gezeigt, sind die Seitenflansche 7 in den Rohrabschnitt 6 integriert (einteilig) und bestehen in der Regel aus demselben Material (GFK) wie der Rohrabschnitt 6. Es ist auch möglich, für den äusseren Flanschteil einen hochmoduligen Kunststoff mit Kohlefaserverstärkung (CFK) zu verwenden (aufwendigere Herstellung). Im Verbindungsbereich der Seitenflansche 7 mit den anliegenden Nabenflanschen 5 kann die Faserverstärkung in Umfangsrichtung orientiert sein (verbesserte Aufnahmefähigkeit von Fliehkräften).

Die Verbindung der Seitenflansche 7 des Zwischenrohres 3 mit den zugeordneten Nabenflanschen 5 zur Drehmomentübertragung erfolgt beim gezeigten Beispiel mittels einer Vielzahl von metallischen Schrauben 8 (einzige Metallteile!).

Die Verbindung könnte z.B. auch durch eine aussenliegende Gewindehülse bei gegeneinander gepressten Flanschflächen oder mittels einer bekannten Zahnkupplung erfolgen.

Es hat sich gezeigt, dass insbesondere die Kombination von niedrig- und hochmoduligem faserverstärktem Kunststoff für die Kupplungsteile sowohl Fliehkräfte als auch Verlagerungen optimal aufzunehmen vermag, wobei durch diese Verwendung von FVW für alle Kupplungsteile ein steifigkeits- und festigkeitsmässig optimales Verhalten bei kleiner Eigenmasse erreicht wird.

## Patentansprüche

1. Wellenkupplung zur Verbindung einer Antriebs- und einer Abtriebswelle, mit zwei auf die Wellen aufzuschrumpfenden Nabenteilen (4) mit je einem Nabenflansch (5) und einem diese miteinander verbindenden Zwischenrohr (3) mit zwei jeweils eine elastisch verformbare Membran bildenden Seitenflanschen (7), welche mit den Nabenflanschen (5) zwecks Drehmomentübertragung verbunden sind, wobei mindestens die Nabenteile (4) mit den zugehörigen Nabenflanschen (5) und das Zwischenrohr (3) mit seinen Seitenflanschen (7) aus Kunststoff bestehen, dabei die Nabenteile (4,5) aus hochmoduligem FVW, dadurch gekennzeichnet, dass die Nabenflansche (5) einen zylindrischen Ansatz (5') aufweisen, welcher mit der zylindrischen Aussenfläche der eigentlichen Nabenteile (4) verbunden ist, dabei die Nabenteile (4,5) aus CFK bestehen, und dass das Zwischenrohr (3) mit seinen Seitenflanschen (7) einstückig ausgebildet ist und aus niedrigmoduligem FVW besteht.

2. Wellenkupplung nach Anspruch 1, dadurch gekennzeichnet, dass der zylindrische Ansatz (5') der Nabenflansche (5) mit der Aussenfläche der eigentlichen Nabenteile (4) verklebt ist.

3. Wellenkupplung nach Anspruch 1, dadurch gekennzeichnet, dass das Zwischenrohr (3) aus niedrigmoduligem GFK besteht.

4. Wellenkupplung nach einem der Ansprüche 1-3, dadurch gekennzeichnet, dass die zylindrischen Ansatze (5') einstückig mit den jeweiligen Nabenflanschen (5) ausgebildet sind.

5. Wellenkupplung nach einem der Ansprüche 1-4, dadurch gekennzeichnet, dass die Faserverstärkung der Seitenflansche (7) des Zwischenrohres (3) mindestens im Verbindungsbereich mit den Nabenflanschen (5) in Umfangsrichtung orientiert ist.

6. Wellenkupplung nach einem der Ansprüche 1-5, dadurch gekennzeichnet, dass die Verbindung zwischen den Nabenflanschen (5) und den Seitenflanschen (7) des Zwischenrohres (3) durch Schrauben (8) erfolgt.

7. Wellenkupplung nach einem der Ansprüche 1-6, dadurch gekennzeichnet, dass die Verbindung der Nabenflanschen (5) mit den Seitenflanschen (7) des Zwischenrohres (3) durch eine aussenliegende Gewindehülse (8) bei gegeneinander gepressten Flanschflächen erfolgt.

8. Wellenkupplung nach einem der Ansprüche 1-5, dadurch gekennzeichnet, dass die Verbindung der Nabenflansche (5) mit den Seitenflanschen (7) des Zwischenrohres (3) als Zahnkupplung ausgeführt ist.

9. Wellenkupplung nach Anspruch 1, dadurch gekennzeichnet, dass die Nabenteile (4) und die auf diese aufgeklebten zylindrischen Ansätze (5') der Nabenflansche (5) aus CFK bestehen, während das Zwischenrohr (3) mit seinen beiden elastische Membranen bildenden Seitenflanschen (7) aus GFK gebildet ist.

10. Wellenkupplung nach Anspruch 1, dadurch gekennzeichnet, dass sowohl die Nabenteile (4), die Nabenflanschen (5) wie auch das Zwischenrohr (3) mit seinen Seitenflanschen (7) aus hochmoduligem FVW, insbesondere CFK, bestehen.

## Claims

1. Shaft coupling for interconnecting a driving shaft and a driven shaft, with two hub parts (4) to be shrunk onto the shafts, each with a hub flange (5) and an intermediate tube (3) interconnecting same with two side flanges (7), each forming an elastically deformable membrane, which are connected to the hub flanges (5) for the transmitting of torque, whereby at least the hub parts (4) with the corresponding side flanges (7) consist of a plastic material, whereby the hub parts (4, 5) consist of a high modulus fiber reinforced plastic material (FVW), characterised in that the hub flanges (5) comprise a cylinder shaped projection (5') which is connected to the cylinder shaped outer surface of the hub parts (4) proper, whereby the hub parts (4,5) consist of CFK and in that the intermediate tube (3) is formed integrally with its side flanges (7) and consists of a low modulus fiber reinforced material (FVW).

2. Shaft coupling according to claim 1, characterised in that the cylinder shaped projection (5') of the hub flanges (5) is bonded to the outer surface of the hub parts (4) proper.

3. Shaft coupling according to claim 1, characterised in that said intermediate tube (3) consists of a low modulus GFK.

4. Shaft coupling according to one of the claims 1 - 3, characterised in that the cylinder shaped projections (5') are formed integrally with the respective hub flanges (5).

5. Shaft coupling according to one of the claims 1 - 4, characterised in that the fibre reinforcement of the side flanges (7) of the intermediate tube (3) is oriented in the direction of the circumference at least in the zones of the connection to the hub flanges (5).

6. Shaft coupling according to one of the claims 1 - 5, characterised in that the connection between the hub flanges (5) and the side flanges (7) of the intermediate tube (3) is accomplished by threaded bolts (8).

7. Shaft coupling according to one of the claims 1 - 6, characterised in that the connection between the hub flanges (5) and the side flanges (7)of the intermediate tube (3) is accomplished by a threaded sleeve (8) locates at the outside at pressed together flange surfaces.

8. Shaft coupling according to one of the claims 1 - 5, characterised in that the connection between the hub flanges (5) and the side flanges (7) of the intermediate tube (3) is accomplished by a toothed coupling.

9. shaft coupling according to claim 1, characterised in that the hub parts (4) and the cylinder shaped projections (5') of the hub flanges (5) bonded thereonto consist of CFK, whereas the intermediate tube (3) with its two side flanges forming elastic membranes are made of GFK.

10. Shaft coupling according to claim 1, characterised in that the hub parts (4) with the corresponding hub flanges (5) and also the intermediate tube (3) with its side flanges (7) consist of a high modulus FVW, specifically CFK.

## Revendications

1. Accouplement d'arbres pour raccorder un arbre moteur et un arbre de sortie, avec deux éléments de moyeu (4) à fretter sur les arbres et comportant chacun un flasque (5) et un tube intermédiaire (3) raccordant ces derniers et présentant deux flasques latéraux (7) formant chacun une membrane élastiquement déformable reliés avec les flasques des éléments de moyeu en vue de la transmission d'un couple, au moins les éléments de moyeu (4) avec leurs flasques (5) et le tube intermédiaire (3) avec ses flasques latéraux (7) étant en matière plastique, les éléments de moyeu (4, 5) en matériau plastique renforcé de fibres à haut module (FVW), caractérisé en ce que les flasques des moyeux (5) comprennent un épaulement cylindrique (5') relié à la surface cylindrique extérieure des éléments de moyeu (4), les parties de moyeu (4, 5) étant en CFK et en ce que le tube intermédiaire (3) forme partie intégrante avec ses flasques latéraux (7) et consiste en un matériaux renforcé de fibres à faible module (FVW).

2. Accouplement d'arbres selon la revendication 1, caractérisé en ce que les épaulements cylindriques (5') des flasques des moyeux (5) sont collés sur la surface extérieure des éléments de moyeu (4).

3. Accouplement d'arbres selon la revendication 1, caractérisé en ce que le tube intermédiaire (3) est en GFK à faible module.

4. Accouplement d'arbres selon l'une des revendications 1 - 3, caractérisé en ce que les épaulements cylindriques (5') forment partie intégrante avec les flasques (5) correspondants.

5. Accouplement d'arbres selon l'une des revendications 1 - 4, caractérisé en ce que le renforcement de fibre des flasques latéraux (7) du tube intermédiaire (3) est orienté, au moins dans les zones de raccordement des flasques de moyeux (5), en direction de la circonférence.

6. Accouplement d'arbres selon l'une des revendications 1 - 5, caractérisé en ce que le raccordement entre les flasques des moyeux (5) et les flasques latéraux (7) du tube intermédiaire (3) est réalisé avec des vis (8).

7. Accouplement d'arbres selon l'une des revendications 1 - 6, caractérisé en ce que le raccordement entre les flasques des moyeux (5) et les flasques latéraux (7) du tube intermédiaire (3) est réalisé au moyen d'une douille filetée (8) disposée extérieurement et avec des surfaces de flasques opposées pressées l'une contre l'autre.

8. Accouplement d'arbres selon l'une des revendications 1 - 5, caractérisé en ce que le raccordement entre les flasques des moyeux (5) et les flasques latéraux (7) du tube intermédiaire est fait au moyen d'une accouplement à dents.

9. Accouplement d'arbres selon la revendication 1, caractérisé en ce que les éléments de moyeu (4) et les épaulements cylindriques (5') des flasques des moyeux (5) collés contre les éléments (4) sont fait en CFK, tandis que le tube intermédiaire (3) avec ses deux flasques latéraux formant des membranes élastiques sont en GFK.

10. Accouplement d'arbres selon la revendication 1, caractérisé en ce que les éléments de moyeu (4), les flasques des moyeux (5) ainsi que le tube intermédiaire (3) avec ses flasques latéraux (7) consistent en un matériau à haut module FVW, particulièrement en CFK.
